# EUROPÄISCHE PATENTSCHRIFT

(11) **EP 1 482 213 B1**
(45) Veröffentlichungstag und Bekanntmachung des Hinweises auf die Patenterteilung: **17.01.2007**
(21) Anmeldenummer: 04011901.8
(22) Anmeldetag: 19.05.2004
(51) Int. Cl.: F16H 59/02

(54) **Betätigungseinrichtung für ein Schaltgetriebe**
Control device for a change-speed gearbox
Dispositif de commande pour boîte de vitesse

(30) Priorität: 28.05.2003 DE 10324224
(43) Veröffentlichungstag der Anmeldung: 01.12.2004
(73) Patentinhaber: Dr. Ing. h.c. F. Porsche Aktiengesellschaft, 70435 Stuttgart (DE)
(72) Erfinder: Netzker, Ralph-Maria, Dipl.-Ing. (FH), 71636 Ludwigsburg (DE); Casper, Thomas, Dipl.-Ing., 66636 Theley (DE); Bencina, Daniel, Dipl.-Ing. (FH), 88287 Grünkraut (DE); Ruf, Gebhard, Dipl.-Ing., 88477 Schönebürg (DE); Seibel, Tibor, Dipl.-Ing. (FH), 88250 Weingarten (DE)

(56) Entgegenhaltungen:
- DE-B- 1 067 644
- US-A- 2 199 926
- US-A- 4 492 129
- US-A- 5 452 623

## Beschreibung

Die Erfindung geht aus von einer Betätigungseinrichtung für ein Schaltgetriebe gemäß den Merkmalen des Oberbegriffs des Patentanspruchs 1.

Zur Verbesserung der Schaltqualität eines Getriebes ist beispielsweise aus der gattungsgemäßen DE 101 61 699 C1 ein mit einer Schaltwelle verbundener Schalthebel bekannt, der ein als elastische Zunge ausgebildetes Innenteil aufweist, an dem der Seilzug bzw. das Schaltgestänge des Getriebes angelenkt bzw. befestigt ist. Bei einer Schaltbetätigung wird das mit einem Spaltabstand zum Außenhebel versehene Innenteil elastisch ausgelenkt, bis es gegebenenfalls am Außenhebel zum Anliegen kommt, um den Kraftfluss auf die Schaltwelle zu übertragen. Damit wird eine Art elastomechanischer Tiefpassfilter gebildet, der hochfrequente Schaltstörungen ausfiltert, bevor diese sich in der Fahrerhand komfortmindernd bemerkbar machen. Nachteilig bei dieser Ausführungsform ist jedoch das relativ aufwendige Herstellungsverfahren eines derart federnden Schalthebels. Aufgrund relativ hoher Biegespannungen sind darüber hinaus die Materialkosten für einen derartigen Schalthebel nicht unerheblich.

Aus der DE-PS 1067 644 ist weiterhin eine elastische Kupplung bekannt, bei der zwei zueinander koaxial geführte Kupplungshälften mit jeweils nach außen bzw. nach innen radial ausgerichteten Stegen unter Zwischenschaltung von Gummirollen den Kraftfluss von der äußeren Kupplungshälfte über die Gummirollen und die innere Kupplungshälfte entsprechend weiterleiten. Weiterhin ist aus der DE 100 47 841 eine Gelenkhebelvorrichtung mit einer elastischen Lagerbuchse zur Vermeidung einer Schwingungsübertragung bekannt.

Aufgabe der Erfindung ist es daher, einen Schalthebel für die Betätigungseinrichtung eines Schaltgetriebes zu entwickeln, der einerseits in der Lage ist, hochfrequente Schaltstörungen zu vermeiden bzw. zu reduzieren und auf der anderen Seite kostengünstig, z. B. durch die Verwendung von Normbauteilen, herstellbar ist.

Die Aufgabe wird durch die im Anspruch 1 angegeben Merkmale gelöst.

Der erfindungsgemäße Schalthebel zeichnet sich einerseits durch einen einfachen Aufbau aus, wobei der aus mehreren Einzelbauteilen bestehende Schalthebel ggf. auch automatisiert montiert werden kann. Aufgrund der zwischen den beiden Kupplungshälften vorgesehenen elastischen Elemente werden hochfrequente Schaltstörungen, die sich in Form von Schwingungen, Vibrationen oder Kratzen beim Synchronisieren bemerkbar machen, wirksam unterbunden.

Durch die in den Unteransprüchen angegebenen Merkmale sind weitere vorteilhafte Ausgestaltungen und Weiterbildungen der Betätigungseinrichtung möglich.

Die mit der Schaltwelle verbindbare innere Kupplungshälfte ist als ein mit radial nach außen verlaufenden Stegen ausgebildetes Mitnehmerkreuz ausgebildet, das in einer Öffnung der äußeren Kupplungshälfte Aufnahme findet. Die'äußere Kupplungshälfte ist mit radial nach innen verlaufenden Stegen versehen, wobei zwischen jeweils einem Steg der inneren und äußeren Kupplungshälfte ein elastisch ausgebildeter Kupplungskörper bzw. Teile davon Aufnahme findet.

Der elastische Kupplungskörper ist in einer ersten Ausführungsform in vorteilhafter Weise als aus einzelnen zylinderförmigen Rollen bestehender Gummikörper ausgebildet. Untersuchungen haben gezeigt, dass beim Aufbringen unterschiedlicher Schaltkräfte sich eine stark progressive Federkennlinie besonders positiv auf die gewünschte Dämpfung auswirkt. In diesem Zusammenhang sind daher die als Federelemente wirkenden elastischen Kupplungskörper mit gekrümmten Anlage- bzw. Auflageflächen besonders geeignet, eine derartige Kennlinie nachzubilden, da mit zunehmender Verformung der elastischen Kupplungskörper die Auflagefläche an den Gummikörpern zunimmt.

In einer zweiten vorteilhaften Ausführungsform besteht der elastisch ausgebildete Kupplungskörper aus einem scheibenförmigen Mitnehmerelement, das analog zu den zylindrisch ausgebildeten Rollen gekrümmte bzw. mit einem Radius versehene Anlageflächen für die Stege des Mitnehmerkreuzes aufweist, so dass auch in diesem Fall eine progressiv verlaufende Federkennlinie umgesetzt werden kann. Das scheibenförmige Mitnehmerelement kann beispielsweise im Spritzgussverfahren in die äußere Kupplungshälfte eingebracht werden oder als separates Bauteil zwischen innere und äußere Kupplungshälfte eingebracht werden.

Um Überlastungen bzw. einen vorzeitigen Verschleiß des elastischen Kupplungskörpers zu vermeiden, sind in der äußeren Kupplungshälfte Ausnehmungen vorgesehen, deren seitliche Begrenzungen als Anschlag für die Stege des Mitnehmerkreuzes (innere Kupplungshälfte) dienen. D. h., nachdem aufgrund hoher Schaltkräfte die mit den Stegen des Mitnehmerkreuzes zusammenwirkenden Anlageflächen des elastischen Kupplungskörpers verformt worden sind, wird nach diesem elastischen Verformungsweg die Kraft bzw. das Schaltmoment direkt von der äußeren Kupplungshälfte auf das innere Mitnehmerkreuz übertragen. Zusätzlich kann damit auch die durch die elastischen Elemente erreichte Filterfunktion bei harten und schnellen Schaltvorgängen außer Kraft gesetzt werden. Dies hat keine spürbaren Nachteile für den Schaltkomfort, da die Schaltstörungen nur bei normalen und langsamen Schaltvorgängen störend in Erscheinung treten.

Zwei Ausführungsbeispiele der Erfindung sind in den Zeichnungen dargestellt und werden im nachfolgenden näher beschrieben:

Es zeigen:
- Fig. 1: eine Explosionsdarstellung des erfindungsgemäßen Schalthebels in einer ersten Ausführungsform,
- Fig. 2: einen Querschnitt durch den zusammengesetzten Schalthebel,
- Fig. 3: eine Explosionsdarstellung des erfindungsgemäßen Schalthebels in einer zweiten Ausführungsform,
- Fig. 4: einen Querschnitt durch den zusammengesetzten Schalthebel gemäß der zweiten Ausführungsform und
- Fig. 5: ein Diagramm zur Darstellung einer Federkennlinie

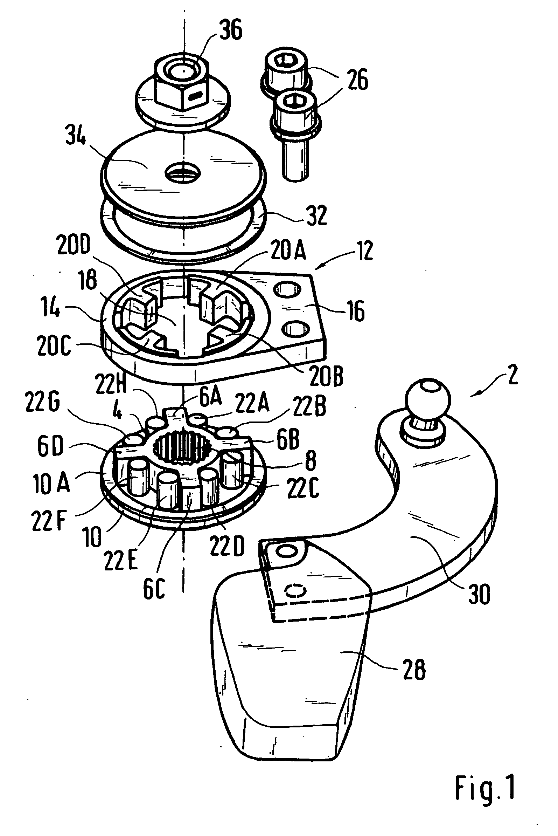

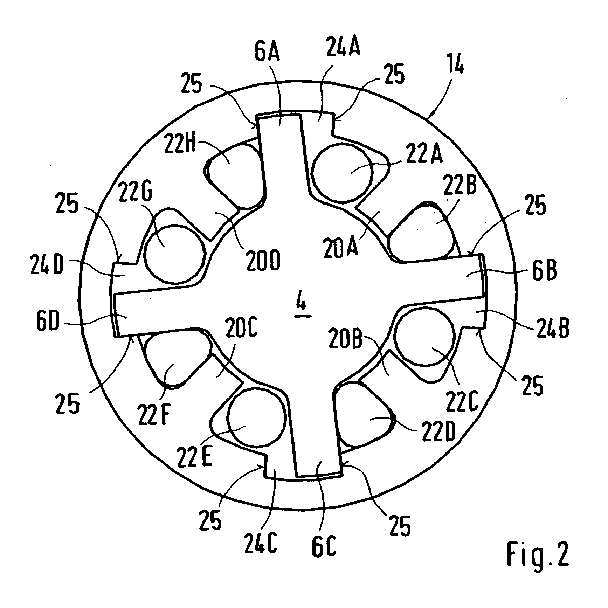

Der in Fig. 1 näher dargestellte Schalthebel weist zur Befestigung an einer nicht dargestellten Schaltwelle eine innere Kupplungshälfte auf, die im folgenden als Mitnehmerkreuz 4 bezeichnet und im vorliegenden Ausführungsbeispiel mit vier radial nach außen verlaufenden Stegen 6a bis 6d versehen ist. Das Mitnehmerkreuz 4 weist eine zentrale innenverzahnte Öffnung 8 auf, in die eine Außenverzahnung der Schaltwelle eingreift. Weiterhin ist das Mitnehmerkreuz 4 einstückig mit einer kreisförmigen Trägerplatte 10 verbunden. Der Schalthebel 2 weist eine äußere Kupplungshälfte 12 auf, die als plattenförmig ausgebildetes Bauteil mit einem Kupplungsring 14 und einem Befestigungsfortsatz 16 versehen ist. Der Kupplungsring 14 weist eine Öffnung 18 auf, in der im zusammengebauten Zustand das Mitnehmerkreuz 4 Aufnahme findet, wobei dann die Trägerplatte 10 mit ihrer Ringfläche 10a seitlich am Kupplungsring 14 zum Anliegen kommt. Der Kupplungsring 14 weist radial nach innen in die Öffnung 18 weisende Stege 20a bis 20d auf, die im zusammengebauten Zustand mit den Stegen 6a bis 6d des Mitnehmerkreuzes 4 zahnartig ineinander greifen. Wie insbesondere aus Fig. 2 erkennbar, sind zwischen den Stegen 6a bis 6d des Mitnehmerkreuzes 4 und den Stegen 20a bis 20d als zylindrische Rollen 22a bis 22h ausgebildete Kupplungskörper aufgenommen. Die zylindrischen Rollen 22 sind dabei als elastische Körper, die bspw. aus Naturkautschuk oder synthetischem Gummi bestehen, ausgebildet. Wie weiterhin aus Fig. 2 ersichtlich, greifen die Stege 6a bis 6d des Mitnehmerkreuzes 4 mit ihren radialen äußeren Enden in am Außenumfang des Kupplungsrings 14 vorgesehene Ausnehmungen 24a bis 24d ein. Dabei dienen deren linken und rechten seitlichen Begrenzungen 25 als Anschlagflächen für die Stege 6a bis 6d, so dass bei Schaltbetätigungen die damit verbundenen Verformungen der zylindrischen Rollen 22 begrenzt werden. Die Verzahnung der inneren und äußeren Kupplungshälfte 6, 12 und die in den Zwischenräumen aufgenommenen Gummikörper sind so dimensioniert, dass sich im Neutralzustand eine im wesentlichen spielfreie Passung ergibt.

In Fig. 1 sind weiterhin zwei Befestigungsschrauben 26 erkennbar, mit deren Hilfe die äußere Kupplungshälfte 12 unter Zwischenschaltung eines Massenelementes 28 am eigentlichen Hebelelement 30 des Schalthebels 2 befestigt ist, wobei das Masseelement 28 zusammen mit den elastischen zylindrischen Rollen 22a bis 22h als Masse- FederSystem wirken. Weiterhin ist ein Distanzring 32 sowie ein Scheibenelement 34 vorgesehen, durch die der Kupplungsring 14 bzw. die äußere Kupplungshälfte 12 auf der der Trägerplatte 10 gegenüberliegenden Seite abgeschlossen ist. Eine Mutter 36 dient zur Befestigung des Schalthebels 2, an der nicht dargestellten Schaltwelle.

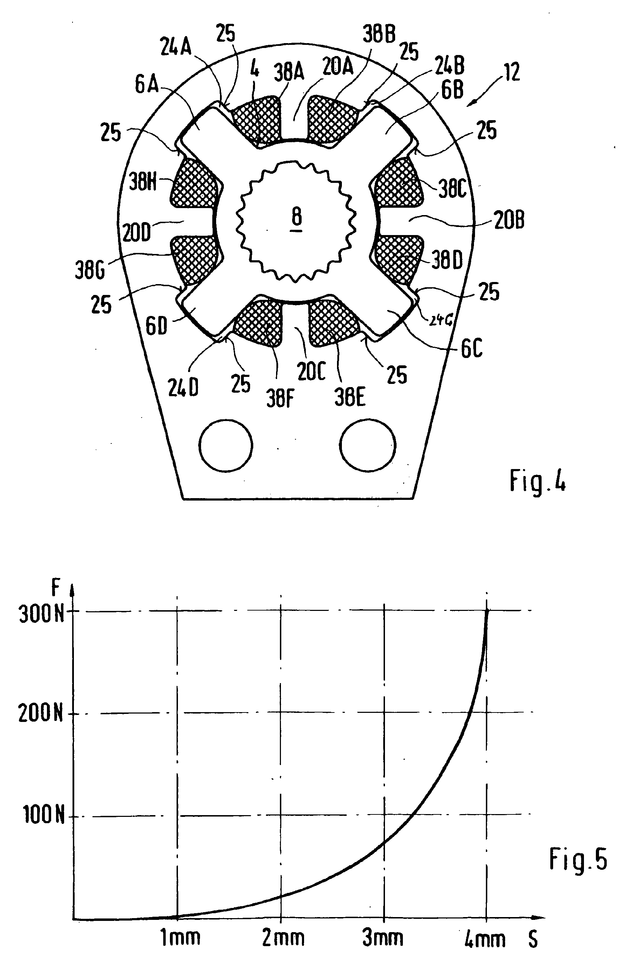

Wird über das Schaltgestänge bzw. den Seilzug des Getriebes auf das Hebelelement 30 des Schalthebels 2 eine Kraft aufgebracht, so wird diese über die zylindrischen Rollen 22a bis 22h auf das Mitnehmerkreuz 4 übertragen und damit die Schaltwelle betätigt. Je nachdem wie hoch die vom Fahrer aufgebrachte Schaltkraft ist, werden die zylindrischen Rollen 22a bis 22h entsprechend verformt. Wie in Fig. 5 dargestellt, ergibt sich aufgrund der gekrümmten bzw. mit einem Radius versehenen Anlagefläche der Rollen 22a bis 22h eine stark progressiv verlaufende Federkennlinie, die besonders geeignet ist, beim Schalt- bzw. Synchronisierungsvorgang erzeugte Schaltstörungen zu unterbinden. Um Verformungen der zylindrischen Rollen 22a bis 22h zu begrenzen, schlagen die Stege 6a bis 6d des Mitnehmerkreuzes 4 bei hohen Schaltkräften an den Anschlagflächen 25 der im Kupplungsring 14 vorgesehenen Ausnehmungen 24 an.

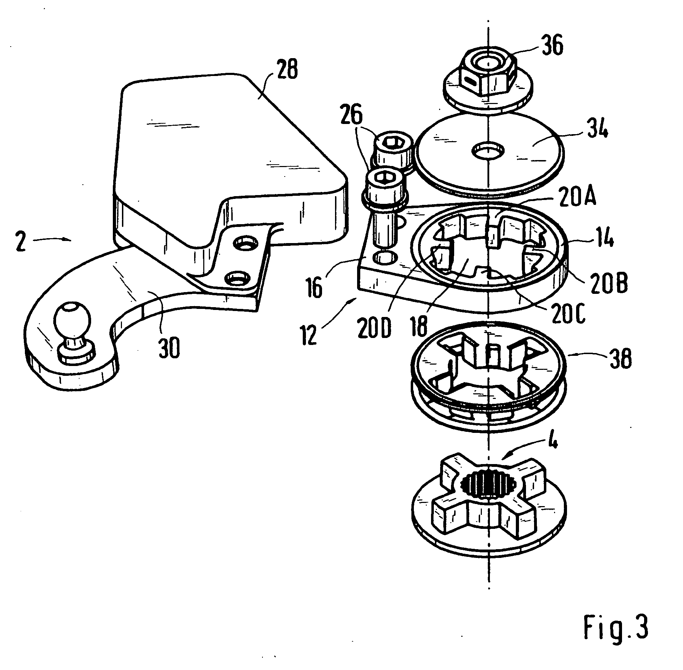

In einem zweiten Ausführungsbeispiel (siehe Figur 3 und 4), bei dem gleiche Bauteile mit gleichen Bezugszeichen versehen sind, ist als elastischer Kupplungskörper zwiscchen Mitnehmerkreuz 4 und äußerer Kupplungshälfte 12 ein scheibenförmiges Mitnehmerelement 38 vorgesehen, das analog zu den zylindrischen Rollen 22 zusammen mit dem Masseelement 28 als Feder- Masse-System hochfrequente Schaltstörungen ausfiltert. Die Stege 6a bis 6d des Mitnehmerkreuzes 4 sind dabei von den einzelnen Segmenten 38a bis 38h des scheibenförmigen Mitnehmerelementes 38 begrenzt, wobei die Anlageflächen für die Stege 6a bis 6d der Segmente 38a bis 38h gekrümmt ausgebildet bzw. mit einem Radius versehen sind. Damit kann analog zum ersten Ausführungsbeispiel die in Fig. 5 dargestellte stark progressiv verlaufende Federkennlinie umgesetzt werden, mit deren Hilfe wirkungsvoll hochfrequente Schaltstörungen reduziert werden.

## Patentansprüche

1. Betätigungseinrichtung für ein Schaltgetriebe, mit einem an einer Schaltwelle des Getriebes befestigten Schalthebel (2), an dem ein Seilzug oder Schaltgestänge angelenkt bzw. befestigt ist, sowie mit Mitteln zur Reduzierung von insbesondere hochfrequenten Schaltstörungen,
**dadurch gekennzeichnet, dass**
- die Mittel zur Reduzierung von insbesondere hochfrequenten Schaltstörungen aus zwei koaxial zueinander angeordneten Kupplungshälften (4, 12) gebildet sind, wobei
- eine innere Kupplungshälfte (4) mit der Schaltwelle und die andere Kupplungshälfte mit dem Schalthebel verbunden sind,
- die zwei Kupplungshälften koaxial zur Schaltwelle angeordnet sind, und
- zwischen den beiden Kupplungshälften (4, 12) mindestens ein elastisches Element (22) angeordnet ist, das als elastomechanischer Tiefpass wirkt.

2. Betätigungseinrichtung nach Anspruch 1, **dadurch gekennzeichnet, dass** die innere Kupplungshälfte als ein mit der Schaltwelle befestigbares Mitnehmerkreuz (4) mit radial nach außen verlaufenden Stegen (6a bis 6d) ausgebildet ist, wobei das Mitnehmerkreuz (4) in einer Öffnung (18) der äußeren Kupplungshälfte (12) Aufnahme findet, an deren Rändern radial nach innen verlaufende Stege (20a bis 20d) ausgebildet sind, und dass zwischen den Stegen (6a bis 6d bzw. 20a bis 20d) beider Kupplungshälften (4, 12) mindestens ein elastisch ausgebildeter Kupplungskörper (22a bis 22d) Aufnahme findet.

3. Betätigungseinrichtung nach Anspruch 2, **dadurch gekennzeichnet, dass** die elastischen Kupplungskörper als zylinderförmige Gummikörper (22a bis 22d) ausgebildet sind.

4. Betätigungseinrichtung nach Anspruch 2, **dadurch gekennzeichnet, dass** der elastische Kupplungskörper als scheibenförmiges Mitnehmerelement (38) ausgebildet ist, dessen Segmente (38a bis 38h) gekrümmt ausgebildete Anlageflächen aufweist, die mit den Stegen (6a bis 6d) des Mitnehmerkreuzes (4) zusammenwirken.

5. Betätigungseinrichtung nach einem der Ansprüche 2 bis 4, **dadurch gekennzeichnet, dass** die freien Enden der Stege (6a bis 6d) des Mitnehmerkreuzes (4) in Ausnehmungen (24a bis 24d) der äußeren Kupplungshälfte (12) eingreifen, wobei die seitlichen Begrenzungen als Anschläge (25) für eine direkte Mitnahme der äußeren Kupplungshälfte (12) dienen.

6. Betätigungseinrichtung nach Anspruch 5, **dadurch gekennzeichnet, dass** beim Endanschlag der Stege (6a bis 6d) des Mitnehmerkreuzes (4) die zwischen den jeweils beiden Stegen (6a bis 6d bzw. 20a bis 20d) angeordneten Gummielemente (22a bis 22d bzw. 38a bis 38h) zumindest teilweise deformiert sind.

7. Betätigungseinrichtung nach einem der vorhergehenden Ansprüche, **dadurch gekennzeichnet, dass** der Schalthebel (2) mit einem zusätzlichen Masseelement (28) versehen ist.

## Claims

1. An actuating device for a manually operated gearbox, having a gearshift lever (2) which is fastened to a gearshift shan of the gearbox and to which a control cable or a gearshift linkage is articulated or fastened, and having means for reducing, in particular, high-frequency gear-shifting faults,
**characterized in that**
- the means for reducing, in particular, high-frequency gear-shifting faults are formed from two clutch halves (4, 12) arranged coaxially with each other, wherein
- an inner clutch half (4) is connected to the gearshift shaft and the other clutch half is connected to the gearshift lever,
- the two clutch halves are arranged coaxially with the gearshift shaft, and
- at least one resilient element (22), which acts as an elastomechanical low-pass filter, is arranged between the two clutch halves (4, 12).

2. An actuating device according to Claim 1, **characterized in that** the inner clutch half is constructed in the form of an entrainment cross (4) capable of being fastened to the gearshift shaft and having webs (6a to 6d) extending radially outwards, wherein the entrainment cross (4) is received in an opening (18) in the outer clutch half (12), on the edges of which webs (20a to 20d) extending radially inwards are formed, and at least one resiliently constructed clutch member (22a to 22d) is received between the webs (6a to 6d and 20a to 20d) of the two clutch halves (4, 12).

3. An actuating device according to Claim 2, **characterized in that** the resilient clutch members are constructed in the form of cylindrical rubber members (22a to 22d).

4. An actuating device according to Claim 2, **characterized in that** the resilient clutch member is constructed in the form of a disc-shaped entrainment element (38), the segments (38a to 38h) of which have abutment faces which are constructed so as to be curved and which co-operate with the webs (6a to 6d) of the entrainment cross (4).

5. An actuating device according to any one of Claims 2 to 4, **characterized in that** the free ends of the webs (6a to 6d) of the entrainment cross (4) engage in recesses (24a to 24d) in the outer clutch half (12), wherein the lateral limits act as stops (25) for a direct entrainment of the outer clutch half (12).

6. An actuating device according to Claim 5, **characterized in that** the rubber elements (22a to 22d and 38a to 38h) arranged between the two webs (6a to 6d and 20a to 20d) in each case are deformed at least in part at the limit stop of the webs (6a to 6d) of the entrainment cross (4).

7. An actuating device according to any one of the preceding Claims, **characterized in that** the gearshift lever (2) is provided with an additional mass element (28).

## Revendications

1. Dispositif de commande pour une boite de vitesses, avec un levier de changement de vitesses (2) fixé sur un arbre de commande, sur lequel un câble sous gaine ou une tringlerie de commande est articulé(e), respectivement fixé(e), ainsi qu'avec des moyens pour réduire notamment des perturbations d'enclenchement à hautes fréquences,
**caractérisé en ce que**
- les moyens pour réduire notamment des perturbations d'enclenchement à de hautes fréquences sont formés par deux moitiés-d'accouplement (4, 12) disposées de façon coaxiale l'une par rapport à l'autre,
- une moitié-accouplement intérieure (4) étant reliée avec l'arbre de commande et l'autre moitié-accouplement étant reliée avec le levier de changement de vitesses,
- les deux moitiés-d'accouplement étant disposées de façon coaxiale par rapport à l'arbre de commande et
- un élément élastique (22) agissant en tant que passe-bas étant disposé entre les deux moitiés-d'accouplement (4, 12).

2. Dispositif de commande selon la revendication 1, **caractérisé en ce que** la moitié-d'accouplement intérieure est conçue sous la forme d'une croix d'entraînement (4) pouvant se fixer sur l'arbre de commande, avec des barrettes (6a à 6d) s'étendant en direction radiale vers l'extérieur, la croix d'entraînement (4) se logeant dans un orifice (18) de la moitié-d'accouplement extérieure (12), sur les bords duquel sont conçues des barrettes (20a à 20d) s'étendant en direction radiale vers l'intérieur et **en ce que** entre les barrettes 6a à 6d ou 20a à 20d) des deux demi-accouplements (4, 12) se loge au moins un organe d'accouplement 22a à 22d) conçu de façon élastique.

3. Dispositif de commande selon la revendication 2, **caractérisé en ce que** les organes d'accouplement élastiques sont conçus sous la forme d'organes en caoutchouc cylindriques (22a à 22d).

4. Dispositif de commande selon la revendication 2, **caractérisé en ce que** l'organe d'accouplement élastique est conçu sous la forme d'un élément entraîneur (38) en forme de disque, dont les segments (38a à 38h) comportent des surfaces d'appui de forme curviligne, qui sont en interaction avec les barrettes (6a à 6d) de la croix d'entraînement (4).

5. Dispositif de commande selon l'une quelconque des revendications 2 à 4, **caractérisé en ce que** les extrémités libres des barrettes (6a à 6d) de la croix d'entraînement (4) s'engagent dans des évidements (24a à 24d) de la moitié-d'accouplement extérieure (12), les limitations latérales faisant office de butées (25) pour un entraînement direct de la moitié-accouplement extérieure (12).

6. Dispositif de commande selon la revendication 5, **caractérisé en ce que** lors de la butée finale des barrettes (6a à 6d) de la croix d'entraînement (4), les éléments en caoutchouc (22a à 22d ou 38a à 38h) disposés entre les deux barrettes respectives (6a à 6d ou 20a à 20d) se déforment au moins partiellement.

7. Dispositif de commande selon l'une quelconque des revendications précédentes, **caractérisé en ce que** le levier de changement de vitesses (2) est muni d'un élément de masse (28) supplémentaire.
